# EUROPÄISCHE PATENTSCHRIFT

(11) **EP 2 679 850 B1**
(45) Veröffentlichungstag und Bekanntmachung des Hinweises auf die Patenterteilung: **26.10.2016**
(21) Anmeldenummer: 12004768.3
(22) Anmeldetag: 26.06.2012
(51) Int. Cl.: F16D 35/02

(54) **Flüssigkeitsreibungskupplung**
Fluid friction coupling
Couplage à friction de liquide

(43) Veröffentlichungstag der Anmeldung: 01.01.2014
(73) Patentinhaber: BorgWarner Inc., Auburn Hills, MI 48326 (US)
(72) Erfinder: Buchholz, Thomas, 78333 Stockach (DE); Raiser, Dennis, 88213 Ravensburg (DE)
(74) Vertreter: Hoefer & Partner Patentanwälte mbB

(56) Entgegenhaltungen:
- EP-A1- 0 936 371
- EP-A1- 1 621 787
- EP-A1- 1 731 787
- DE-A1-102010 043 264
- US-A- 5 499 706

## Beschreibung

Die Erfindung betrifft eine Flüssigkeitsreibungskupplung gemäß dem Oberbegriff des Anspruches 1.

Eine derartige Flüssigkeitsreibungskupplung ist aus der DE 10 2010 043 264 A1 bekannt. Bei dieser bekannten Flüssigkeitsreibungskupplung ist zur Trennung des Arbeitsraumes vom Vorratsraum ein separates Bauteil in Form einer Zwischenscheibe bzw. Trennwand vorgesehen. Diese Trennwand ist starr mit der angetriebenen Seite, also dem Gehäuse der Kupplung, verbunden. Diese Trennwand weist zumindest ein Ventil, in der Regel jedoch zwei Ventile, auf, um einen Flüssigkeitsfluss zwischen dem Vorratsraum und dem Arbeitsraum zu steuern. Ferner ist zumindest ein Stauelement vorgesehen, das am Spalt angeordnet ist, um durch die Drehzahldifferenz einen Staudruck in der Flüssigkeit zu bewirken, der den Flüssigkeitsfluss unterstützt.

Durch das Vorsehen dieser Trennwand ergibt sich jedoch das technische Problem, dass die Baulänge der gesamten Kupplung erheblich erhöht wird. Dies wiederum hat den Nachteil, dass bei beengten Einbauverhältnissen derartig aufgebaute Flüssigkeitsreibungskupplungen nicht zum Einsatz gebracht werden können.

Eine weitere Flüssigkeitsreibungskupplung ist aus der US 5 499 706 A bekannt.

Es ist Aufgabe der vorliegenden Erfindung, eine Flüssigkeitsreibungskupplung der im Oberbegriff des Anspruches 1 angegebenen Art zu schaffen, mit der es auf einfache Art und Weise möglich ist, die Kupplungseffizienz zu steigern und die Baulänge der Kupplung zu reduzieren.

Die Lösung dieser Aufgabe erfolgt durch die Merkmale des Anspruchs 1.

Durch die Integration des Vorlaufpumpenelementes in der Kupplungsscheibe, die mit dem Gehäuse einen Scherspalt definiert, wird es möglich gemacht, auf einfache Art und Weise durch Ausnutzung einer Differenzdrehzahl zwischen dem Pumpenelement und dem Gehäuse bzw. der Primärseite der Flüssigkeitsreibungskupplung einen von der Differenzdrehzahl abhängigen Volumenstrom von der Vorratskammer in die Arbeitskammer zu erzeugen.

Zu den besonderen Vorteilen der erfindungsgemäßen Flüssigkeitsreibungskupplung zählt zunächst, dass nur eine geringe Menge an Kupplungsflüssigkeit erforderlich ist, da aufgrund der zuvor erläuterten Anordnung eine aktive Förderpumpe im Ölreservoir gebildet wird, was hinsichtlich der Kupplungsflüssigkeitsmenge gegenüber dem bekannten Ausnutzen von Zentrifugalkräften zum Füllen der Arbeitskammer vorteilhaft ist.

Ferner wird das Ansprechverhalten der erfindungsgemäßen Flüssigkeitsreibungskupplung aufgrund des niedrigeren Kupplungsflüssigkeitsanteils schneller.

Es ergibt sich ferner eine äußerst kompakte Bauweise, da insbesondere die Kupplungslänge dadurch vermindert werden kann, dass anstelle eines separaten Bauteiles zur Trennung von Arbeitskammer und Vorratskammer diese Trennung ausschließlich über die Kupplungsscheibe erfolgt, was neben der kompakteren Bauweise den Vorteil ergibt, dass die Bauteilanzahl verringert werden kann, was eine kostengünstigere Bauweise ergibt.

Zusammenfassend ist somit festzustellen, dass aufgrund des Umstandes, dass das Vorlaufpumpenelement mit Sekundärdrehzahl (Drehzahl der Welle bzw. des Wirkorgans) dreht und gegenüber dem Gehäuse Kupplungsflüssigkeit abstreift, eine hervorragende Kupplungsleistung erreichbar ist.

Die Unteransprüche haben vorteilhafte Weiterbildungen der Erfindung zum Inhalt.

Die Kupplungsleistung kann ferner dadurch verbessert werden, dass eine Rückförderpumpe vorgesehen ist, die ebenfalls in der Kupplungsscheibe integriert ist.

Ferner ist es erfindungsgemäß möglich, alle wesentlichen Komponenten des Kupplungsflüssigkeitskreislaufes in bzw. auf der Kupplungsscheibe zu integrieren. Dies betrifft insbesondere die zuvor bereits genannte Vorlaufpumpe, eine Steuerventilanordnung, das Labyrinth der Arbeitskammer, eine Trennwand zur Trennung der Arbeitskammer von der Vorratskammer und die Rückförderpumpe, die alle als integrale Bestandteile der Kupplungsscheibe ausgebildet sein können.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1: eine Schnittdarstellung einer erfindungsgemäßen Flüssigkeitsreibungskupplung, und
- Fig. 2: eine perspektivische Darstellung einer Kupplungsscheibe der erfindungsgemäßen Flüssigkeitskupplung,
- Fig. 3: eine der Fig. 2 entsprechende Darstellung der Kupplungsscheibe in gedrehter Ansicht, und
- Fig. 4: eine auseinandergezogene Darstellung der Kupplungsscheibe und der Komponenten einer Steuerventilanordnung.

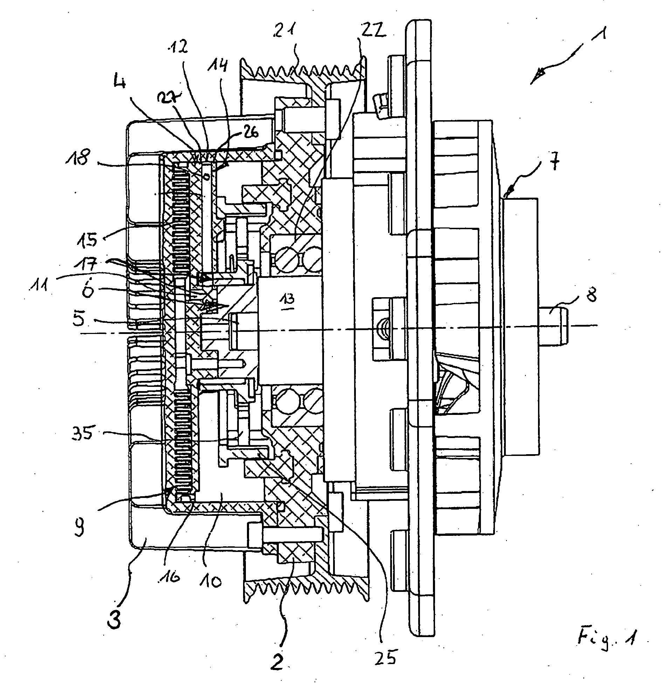

In Fig. 1 ist eine Schnittdarstellung einer erfindungsgemäßen Flüssigkeitsreibungskupplung 1 dargestellt, die ein Gehäuse aufweist, das üblicherweise aus einem Gehäusekörper 2 und einem Deckel 3 aufgebaut ist.

Im Gehäuse 2, 3 ist eine Kupplungsscheibe 4 angeordnet, die gegenüber dem Gehäuse 2, 3 drehbar ist. Die Kupplungsscheibe 4 ist hierbei drehfest mit einem Ende 5 einer zentral innerhalb des Gehäuses 2, 3 gelagerten Welle 6 verbunden. Am anderen Ende 8 der Welle ist ein schematisch vereinfacht dargestelltes antreibbares Wirkorgan 7 fixiert, das beispielsweise als Pumpenrad oder als Kompressor ausgebildet sein kann.

Eine Arbeitskammer 9 ist zwischen dem Gehäuse 2, 3 und der Kupplungsscheibe 4 angeordnet, die, wie aus Fig. 1 ersichtlich ist, Arbeitsspalte 15 aufweist, die aufgrund einer Scherwirkung auf die der Arbeitskammer 9 zugeführten Kupplungsflüssigkeit eine Drehmomentübertragung möglich machen.

Ferner ist eine Vorratskammer 10 für die genannte Kupplungsflüssigkeit vorgesehen, wobei ein Zuführkanal 11 von der Vorratskammer 10 zur Arbeitskammer 9 führt und damit den Vorlauf bildet.

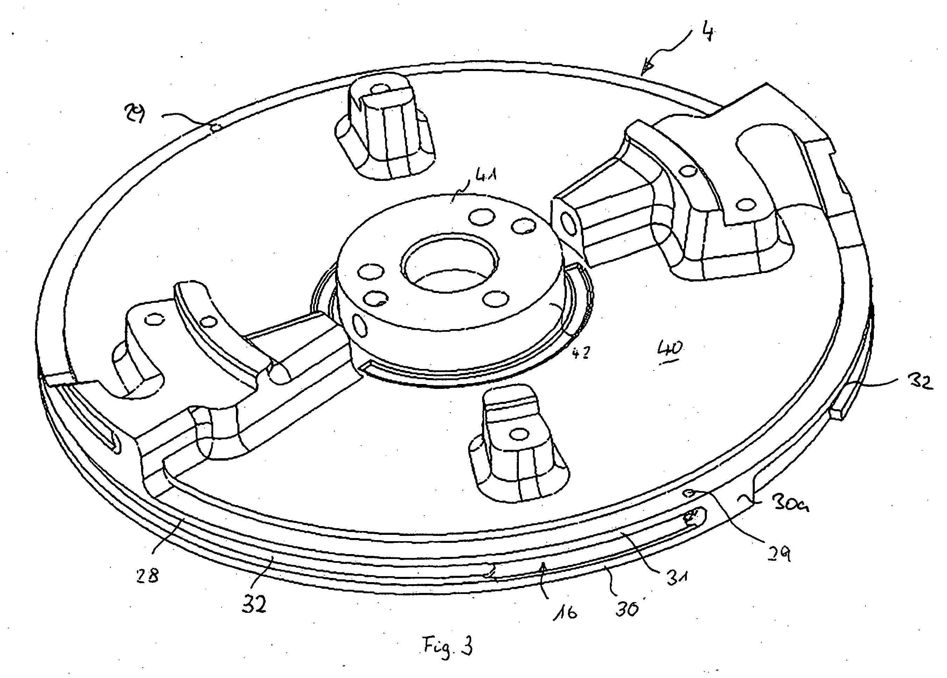

Wie insbesondere aus Fig. 3 ersichtlich ist, ist ferner ein Rückpumpsystem bzw. eine Rückförderpumpe 16 vorgesehen, die zur Rückführung der Kupplungsflüssigkeit von der Arbeitskammer 9 zur Vorratskammer 10 dient. Wie sich aus der Figur ergibt, ist die Rückförderpumpe 16 in der Kupplungsscheibe 4 integriert.

Mit dem Gehäuse 2, 3 ist ferner ein Antriebsorgan 21, wie beispielsweise eine Riemenscheibe, verbunden. Die Flüssigkeitsreibungskupplung 1 weist ferner ein stationäres Kupplungsteil 13 auf, an dem über ein Hauptlager 22 das Gehäuse 2, 3 gelagert ist. Die Welle 6 ist über ein nicht sichtbares Sekundärlager an dem stationären Kupplungsteil 13 gelagert.

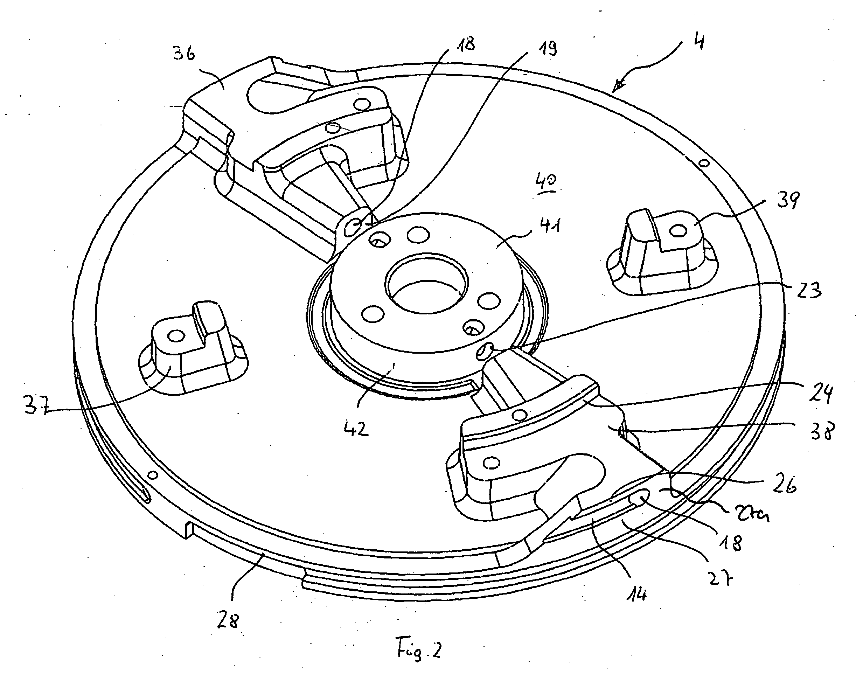

Wie Fig. 2 zeigt, zeichnet sich die erfindungsgemäße Flüssigkeitsreibungskupplung 1 durch das Vorsehen eines Vorlaufpumpenelements 14 aus, das in der Kupplungsscheibe 4 integriert und damit drehfest auf der Welle 6 gelagert ist und somit gegenüber dem Gehäuse 2, 3, nicht jedoch gegenüber der Welle 6 drehbar ist.

Das Vorlaufpumpenelement 14 weist im dargestellten Beispielsfalle an seinem radialen Außenrand einen Scherspalt 12 auf, der gegenüber dem Gehäuse 2, 3 über Dichtstege 26, 27, 27a abgedichtet ist. Durch diese Anordnung wird eine Förderpumpe gebildet, die aufgrund einer zu erzeugenden Differenzdrehzahl zwischen dem Vorlaufpumpenelement 14 und dem Gehäuse 2, 3 einen Volumenstrom von Kupplungsflüssigkeit von der Vorratskammer 10 zur Arbeitskammer 9 ermöglicht.

Der Volumenstrom von der Vorratskammer 10 in die Arbeitskammer 9 wird durch das zuvor erläuterte Vorlaufpumpenelement 14 im Zusammenhang mit dem erläuterten Scherspalt 12 erzeugt. Das Vorlaufpumpenelement 14 und der Scherspalt 12 bilden hierbei eine Förderpumpe, deren Wirkprinzip auf einer Drehzahldifferenz beruht.

Wie Fig. 1 ferner zeigt, ist im Zuführkanal 11 ein Ventil 17 angeordnet, das zusammen mit dem mit Sekundärdrehzahl drehenden Vorlaufpumpenelement 14 den Zulauf in die Arbeitskammer 9 regelt.

Fig. 2 zeigt die Kupplungsscheibe 4 aus einer Ansicht auf eine Rückfläche 40 der Kupplungsscheibe 4, die diejenige Fläche ist, die der Fläche mit den Arbeitsspalten 15 gegenüber liegt.

Bei der in Fig. 2 dargestellten besonders bevorzugten Ausführungsform weisen die Führungsstücke 36 und 38 jeweils einen Füllkanal 18 auf, wobei aufgrund der in Fig. 2 gewählten Darstellung der Füllkanal des Führungsstücks 36 nicht sichtbar ist. Die am Führungsstück 36 sichtbare Öffnung stellt das Ende des Kanals 18 dar, der am Führungsstück 38 angeordnet ist. Der Füllkanal 18 mündet in das Vorlaufpumpenelement 14, das am Führungsstück 38 sichtbar ist. Das Vorlaufpumpenelement 14 ist von Stegen 26, 27 und 27a begrenzt. Bei der in Fig. 2 dargestellten besonders bevorzugten Ausführungsform handelt es sich somit um eine symmetrische Ausbildung, bei der die Führungsstücke 36 und 38 jeweils einen Füllkanal 18 und ein Vorlaufpumpenelement 14 aufweisen. Alternativ wäre jedoch auch eine asymmetrische Ausbildung denkbar, bei der dann nur eines der Führungsstücke 36 oder 38 mit dem jeweiligen Füllkanal 18 und dem Vorlaufpumpenelement 14 vorgesehen ist.

Wie Fig. 2 ferner zeigt, weist das Führungsstück 36 eine Dichtfläche 19 für das Ventil 17 auf.

Eine weitere Dichtfläche 23 ist in Fig. 2 sichtbar, die in einer Zylinderwand 42 eines mittigen Führungszylinders 41 vorgesehen ist.

Schließlich zeigt Fig. 2 das Vorsehen eines Trennsteges 28, der ebenfalls in Fig. 3 sichtbar ist und einen integralen Bestandteil der Kupplungsscheibe 4 bildet. Der Trennsteg 28 dient zur Trennung der Vorratskammer 10 von der Arbeitskammer 9, ohne dass hierfür ein weiteres separates Bauteil erforderlich ist.

Die Darstellung der Kupplungsscheibe 4 gemäß Fig. 3 verdeutlicht ferner, dass die Rückförderpumpe 16 ebenfalls ein integraler Bestandteil der Kupplungsscheibe 4 ist, wobei die Rückförderpumpe 16 von drei Dichtstegen 30, 30a und 31 begrenzt wird und in eine Rücklaufbohrung 29 führt. Auch hinsichtlich der Rückförderpumpe 16 ist die in Fig. 3 dargestellte besonders bevorzugte Ausführungsform symmetrisch aufgebaut, was bedeutet, dass zwei Rückförderpumpen 16 vorgesehen sind, wobei die zweite in Fig. 3 nicht sichtbare Rückförderpumpe am diametral der Rückförderpumpe 16 gegenüberliegenden Stirnwandbereich der Kupplungsscheibe 4 angeordnet ist. Hinsichtlich ihres Aufbaues entspricht diese zweite Rückförderpumpe der in Fig. 3 sichtbaren Rückförderpumpe 16.

Ferner ist in der kreisförmig umlaufenden Stirnfläche der Kupplungsscheibe 4 neben der Rückförderpumpe 16 ein Sammelkanal 32 zum Sammeln des rückströmenden Öles bzw. der Kupplungsflüssigkeit vorgesehen. Bezüglich des Sammelkanals 32 ist zu betonen, dass es sich auch hierbei um eine symmetrische Ausführungsform handelt, die entsprechend dieser besonders bevorzugten Ausführungsform der Fig. 3 zwei Sammelkanäle aufweist, von denen nur der in Fig. 3 dargestellte Sammelkanal sichtbar ist. Der zweite Sammelkanal 32 ist wiederum diametral gegenüber dem in Fig. 3 sichtbaren Sammelkanal angeordnet und identisch aufgebaut.

Wie es im Zusammenhang mit dem Merkmal des Füllkanals und des Vorlaufpumpenelementes betont wurde, ist auch hinsichtlich der Rückförderpumpe 16 und des Sammelkanals 32 eine asymmetrische Ausbildung denkbar, bei der jeweils nur eine Rückförderpumpe und ein Sammelkanal vorgesehen ist.

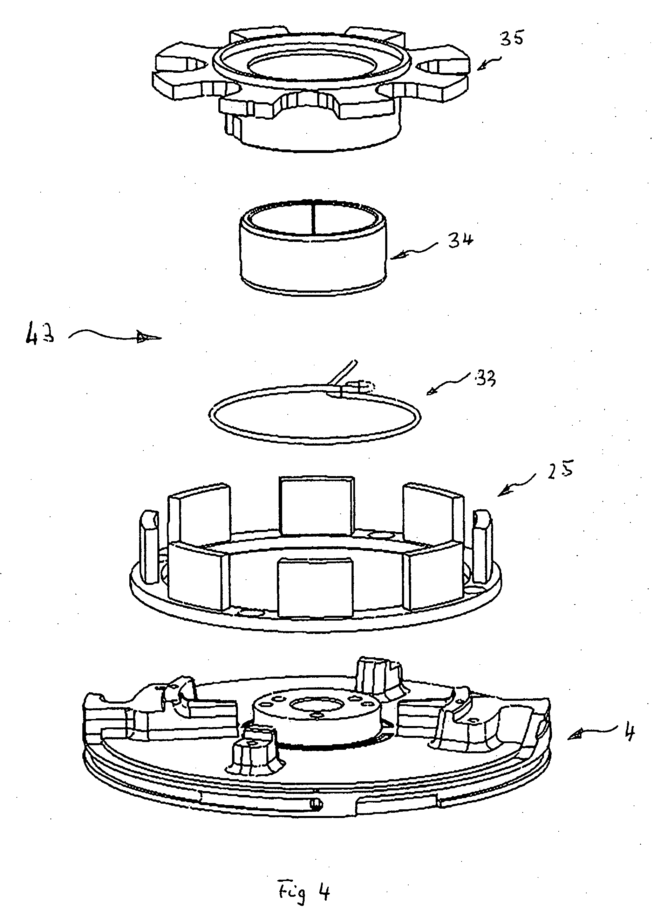

Fig. 4 zeigt schließlich eine auseinandergezogene Darstellung einer in ihrer Gesamtheit mit dem Bezugszeichen 43 bezeichneten Steuerventilanordnung und der Kupplungsscheibe 4, die in Fig. 1 im Montagezustand dargestellt sind.

Die Steuerventilanordnung 43 weist einen Fluxring 25, eine Rückstellfeder 33, eine Buchse 34 und einen Anker 35 mit Ventilfunktion auf, deren Aufbau sich im Einzelnen aus der Darstellung der Fig. 4 ergibt, auf die diesbezüglich explizit Bezug genommen wird.

Im in Fig. 1 dargestellten Endmontagezustand bildet die Steuerventilanordnung 43 mithin ebenfalls einen integralen Bestandteil der Kupplungsscheibe 4, was die kompakte Bauform der erfindungsgemäßen Flüssigkeitsreibungskupplung 1 weiter unterstützt.

Zusammenfassend kann mithin festgehalten werden, dass die erfindungsgemäßen Prinzipien eine Integration des Vorlaufpumpenelements bzw. der Füllpumpe 14 auf der Kupplungsscheibe 4 möglich machen, wobei das Vorlaufpumpenelement 14 einen Flüssigkeitsstrom von der Vorratskammer 10 in die Arbeitskammer 9 und damit in die Kupplungsscheibe 4 ermöglicht.

Ferner kann auch eine Integration der Rückförderpumpe 16, die einen Rückfluss von Kupplungsflüssigkeit von der Arbeitskammer 9 in die Vorratskammer 10 bewerkstelligt, in der Kupplungsscheibe 4 möglich gemacht werden.

Die beschriebenen Pumpensysteme verwenden Dichtungswände bzw. Dichtstege zwischen der Kupplungsscheibe 4 und dem Gehäuse 2, 3 der Flüssigkeitsreibungskupplung 1.

Ferner sind die beschriebenen Pumpsysteme Teile, die gegenüber dem Gehäuse 2, 3 drehen und damit einen Druck aufbauen, der auf einer Drehzahldifferenz zwischen dem Gehäuse 2, 3 und der Kupplungsscheibe 4 beruht.

Die anhand der Fig. 4 beschrieben Steuerventilanordnung 43 kann ebenfalls in der Gesamtheit ihrer Bauteil auf der Kupplungsscheibe 4 integriert bzw. angeordnet werden.

Schließlich ist eine Trennwand bzw. ein Trennsteg 28 als integraler Bestandteil der Kupplungsscheibe 4 vorgesehen, der die Trennung zwischen der Arbeitskammer 9 und der Vorratskammer 10 bewirkt, ohne dass ein zusätzliches Teil für diese Trennung erforderlich ist. Diese Trennwand bzw. der Trennsteg begrenzt einen drehenden Spalt zwischen dem Gehäuse 2, 3 und der Kupplungsscheibe 4, wobei sich der Vorteil einer minimalen Leckagerate ergibt.

Neben der schriftlichen Offenbarung der Erfindung wird hiermit explizit auf deren zeichnerische Darstellung in den Fig. 1 bis 4 Bezug genommen.

### Bezugszeichenliste

- 1: Flüssigkeitsreibungskupplung
- 2, 3: Gehäuse (2: Gehäusekörper, 3: Deckel)
- 4: Kupplungsscheibe
- 5: Ende der Welle 6
- 6: Welle
- 7: Wirkorgan (z.B. Pumpenrad, Lüfterrad usw.)
- 8: zweites Ende der Welle 6
- 9: Arbeitskammer
- 10: Vorratskammer
- 11: Zuführkanal
- 12: Scherspalt
- 13: stationäres Kupplungsteil (Pumpengehäuse)
- 14: Vorlaufpumpenelement
- 15: Arbeitsspalte
- 16: Rückförderpumpe / Abpumpsystem
- 17: Ventil
- 18: Füllkanal
- 19: erste Dichtfläche des Ventils (äußere Dichtfläche)
- 21: Antriebsorgan, insbesondere Riemenscheibe am Gehäuse 2, 3
- 22: Hauptlager
- 23: zweite Dichtfläche des Ventils (innere Dichtfläche)
- 24: Zentrierung des Fluxrings
- 25: Fluxring
- 26, 27, 27a: Dichtstege
- 28: Trennsteg / Trennwand
- 29: Rücklaufbohrung
- 30, 30a, 31: Dichtstege
- 32: Sammelkanal
- 33: Rückstellfeder
- 34: Buchse
- 35: Anker mit Ventilfunktion
- 36 bis 39: Führungsstücke
- 40: Rückfläche
- 41: mittiger Führungszylinder
- 42: Zylinderwand
- 43: Steuerventilanordnung

## Patentansprüche

1. Flüssigkeitsreibungskupplung (1)
- mit einem Gehäuse (2, 3)
- mit einer Kupplungsscheibe (4),
▪ die gegenüber dem Gehäuse (2, 3) drehbar ist, und
▪ die an einem Ende (5) einer zentral innerhalb des Gehäuses (2, 3) gelagerten Welle (6) angeordnet ist, die an ihrem anderen Ende (8) ein antreibbares Wirkorgan (7) trägt;
- mit einer Arbeitskammer (9) zwischen dem Gehäuse (2, 3) und der Kupplungsscheibe (4);
- mit einer Vorratskammer (10) für Kupplungsflüssigkeit; und
- mit einem Zuführkanal (11), der von der Vorratskammer (10) zur Arbeitskammer (9) führt;
**gekennzeichnet**
- **durch** ein gegenüber dem Gehäuse (2, 3) drehbares Vorlaufpumpenelement (14), das in der Kupplungsscheibe (4) integriert ist wobei das Vorlaufpumpenelement (14) einen Flüssigkeitstrom von der Vorratskammer (10) in die Arbeitskammer (9) und damit in die Kupplungsscheibe (4) ermöglicht.

2. Flüssigkeitsreibungskupplung nach Anspruch 1, **dadurch gekennzeichnet, dass** die Kupplungsscheibe (4) drehfest auf der Welle (6) angeordnet ist.

3. Flüssigkeitsreibungskupplung nach Anspruch 1 oder 2, **dadurch gekennzeichnet, dass** die Kupplungsscheibe (4) mit dem Vorlaufpumpenelement (14) einen Scherspalt (12) mit dem Gehäuse (2, 3) definiert.

4. Flüssigkeitsreibungskupplung nach einem der Ansprüche 1 bis 3, **dadurch gekennzeichnet, dass** im Zuführkanal (11) ein Ventil (17)angeordnet ist.

5. Flüssigkeitsreibungskupplung nach einem der Ansprüche 1 bis 4, **gekennzeichnet durch** eine Rückförderpumpe (16) zur Rückführung von Kupplungsflüssigkeit von der Arbeitskammer (9) zur Vorratskammer (10).

6. Flüssigkeitsreibungskupplung nach Anspruch 5, **dadurch gekennzeichnet, dass** die Rückförderpumpe (16) in der Kupplungsscheibe (4) integriert ist.

7. Flüssigkeitsreibungskupplung nach einem der Ansprüche 1 bis 6, **dadurch gekennzeichnet, dass** die Trennung von Arbeitskammer (9) und Vorratskammer (10) durch die Kupplungsscheibe (4) erfolgt.

8. Flüssigkeitsreibungskupplung nach Anspruch 7, **dadurch gekennzeichnet, dass** die Kupplungsscheibe (4) zumindest einen Trennsteg (28) aufweist.

9. Flüssigkeitsreibungskupplung nach einem der Ansprüche 1 bis 8, **dadurch gekennzeichnet, dass** eine Steuerventilanordnung (43) vorgesehen ist, die auf der Kupplungsscheibe (4) angeordnet ist.

10. Flüssigkeitsreibungskupplung nach einem der Ansprüche 1 bis 9, **gekennzeichnet durch** ein stationäres Kupplungsteil (13), gegenüber dem das Gehäuse (2, 3) drehbar ist.

11. Flüssigkeitsreibungskupplung nach einem der Ansprüche 3 bis 10, **dadurch gekennzeichnet, dass** der Scherspalt (12) durch drei Seitenwände begrenzt ist.

## Claims

1. Fluid friction clutch (1),
- with a housing (2, 3)
- with a coupling disk (4),
• which is rotatable in relation to the housing (2, 3) and
• which is arranged on one end (5) of a shaft (6) mounted centrally within the housing (2, 3), which shaft carries a drivable active element (7) on its other end (8);
- with a working chamber (9) between the housing (2, 3) and the coupling disk (4);
- with a storage chamber (10) for coupling fluid; and with a supply channel (11) which leads from the storage chamber (10) to the working chamber (9);
**characterized**
- **by** a supply pump element (14) which is rotatable in relation to the housing (2, 3) and is integrated in the coupling disk (4), the supply pump element (14) making a liquid flow possible from the storage chamber (10) into the working chamber (9) and therefore into the coupling disk (4).

2. Fluid friction clutch according to Claim 1, **characterized in that** the coupling disk (4) is arranged rotationally fixed on the shaft (6).

3. Fluid friction clutch according to Claim 1 or 2, **characterized in that** the coupling disk (4) with the supply pump element (14) defines a shear gap (12) with the housing (2, 3).

4. Fluid friction clutch according to any of Claims 1 to 3, **characterized in that** a valve (17) is arranged in the supply channel (11).

5. Fluid friction clutch according to any of Claims 1 to 4, **characterized by** a return pump (16) for returning coupling fluid from the working chamber (9) to the storage chamber (10).

6. Fluid friction clutch according to Claim 5, **characterized in that** the return pump (16) is integrated in the coupling disk (4).

7. Fluid friction clutch according to any of Claims 1 to 6, **characterized in that** the working chamber (9) is separated from the storage chamber (10) by the coupling disk (4).

8. Fluid friction clutch according to Claim 7, **characterized in that** the coupling disk (4) has at least one separating web (28).

9. Fluid friction clutch according to any of Claims 1 to 8, **characterized in that** a control valve arrangement (43) is provided which is arranged on the coupling disk (4).

10. Fluid friction clutch according to any of Claims 1 to 9, **characterized by** a stationary coupling part (13), in relation to which the housing (2, 3) is rotatable.

11. Fluid friction clutch according to any of Claims 3 to 10, **characterized in that** the shear gap (12) is delimited by three side walls.

## Revendications

1. Embrayage à friction de liquide (1), comprenant :
- un boîtier (2, 3),
- un disque d'embrayage (4),
- qui peut tourner par rapport au boîtier (2, 3), et
- qui est disposé à une extrémité (5) d'un arbre (6) supporté centralement à l'intérieur du boîtier (2, 3), qui porte à son autre extrémité (8) un organe fonctionnel (7) pouvant être entraîné ;
- une chambre de travail (9) entre le boîtier (2, 3) et le disque d'embrayage (4),
- une chambre de réserve (10) pour le liquide d'embrayage ; et
- un canal d'alimentation (11) qui conduit de la chambre de réserve (10) à la chambre de travail (9) ;
**caractérisé**
- **par** un élément de pompe d'alimentation (14) pouvant tourner par rapport au boîtier (2, 3), qui est intégré dans le disque d'embrayage (4), l'élément de pompe d'alimentation (14) permettant un flux de liquide depuis la chambre de réserve (10) dans la chambre de travail (9) et par conséquent dans le disque d'embrayage (4).

2. Embrayage à friction de liquide selon la revendication 1, **caractérisé en ce que** le disque d'embrayage (4) est disposé de manière solidaire en rotation sur l'arbre (6).

3. Embrayage à friction de liquide selon la revendication 1 ou 2, **caractérisé en ce que** le disque d'embrayage (4) définit avec l'élément de pompe d'alimentation (14) une fente de cisaillement (12) avec le boîtier (2, 3).

4. Embrayage à friction de liquide selon l'une quelconque des revendications 1 à 3, **caractérisé en ce qu'**une soupape (17) est disposée dans le canal d'alimentation (11).

5. Embrayage à friction de liquide selon l'une quelconque des revendications 1 à 4, **caractérisé par** une pompe de refoulement (16) pour refouler le liquide d'embrayage depuis la chambre de travail (9) vers la chambre de réserve (10).

6. Embrayage à friction de liquide selon la revendication 5, **caractérisé en ce que** la pompe de reflux (16) est intégrée dans le disque d'embrayage (4).

7. Embrayage à friction de liquide selon l'une quelconque des revendications 1 à 6, **caractérisé en ce que** la séparation de la chambre de travail (9) et de la chambre de réserve (10) est réalisée par le disque d'embrayage (4).

8. Embrayage à friction de liquide selon la revendication 7, **caractérisé en ce que** le disque d'embrayage (4) présente au moins une nervure de séparation (28).

9. Embrayage à friction de liquide selon l'une quelconque des revendications 1 à 8, **caractérisé en ce qu'**un agencement de soupape de commande (43) est prévu, lequel est disposé sur le disque d'embrayage (4).

10. Embrayage à friction de liquide selon l'une quelconque des revendications 1 à 9, **caractérisé par** une partie embrayage stationnaire (13) par rapport à laquelle le boîtier (2, 3) peut tourner.

11. Embrayage à friction de liquide selon l'une quelconque des revendications 3 à 10, **caractérisé en ce que** la fente de cisaillement (12) est limitée par trois parois latérales.
